# FASCICULE DE BREVET EUROPEEN

(11) **EP 4 576 761 B1**
(45) Date de publication et mention de la délivrance du brevet: **09.12.2026**
(21) Numéro de dépôt: 24220878.3
(22) Date de dépôt: 18.12.2024
(51) Int. Cl.: H04N 7/14, G06V 40/16, H04L 12/18, H04N 21/442, H04N 21/454, H04N 21/475, H04N 21/4788, H04N 21/4223

(54) **MÉTHODE ET DISPOSITIF DE COMMUNICATION PAR VIDÉO**
VERFAHREN UND VORRICHTUNG ZUR VIDEOKOMMUNIKATION
VIDEO COMMUNICATION METHOD AND APPARATUS

(30) Priorité: 21.12.2023 FR 2314754
(43) Date de publication de la demande: 25.06.2025
(73) Titulaire: Sagemcom Broadband SAS, 92270 Bois-Colombes (FR)
(72) Inventeur: OBEID, Jad Abdul Rahman, 92270 BOIS-COLOMBES (FR); SCHOTT, Vincent, 92270 BOIS-COLOMBES (FR)
(74) Mandataire: Novagraaf Technologies

(56) Documents cités:
- EP-A1- 3 101 838
- EP-A1- 4 080 446
- EP-A1- 4 221 184
- WO-A1-2024/058898
- JP-A- 2022 143 122
- US-A1- 2019 147 175
- US-A1- 2020 211 201
- US-A1- 20230 179 741
- US-B1- 10 904 485
- JOHANNES MERKLE ET AL: "State of the Art of Quality Assessment of Facial Images", ARXIV.ORG, CORNELL UNIVERSITY LIBRARY, 201 OLIN LIBRARY CORNELL UNIVERSITY ITHACA, NY 14853, 15 November 2022 (2022-11-15), XP091369677

## Description

### Domaine technique

Sont décrits une méthode et un dispositif de communication par vidéo. La méthode et le dispositif peuvent être utilisés par exemple dans le cadre d'une application d'appel vidéo ou de visioconférence.

### Arrière-plan technique

Les systèmes d'appel vidéo ou de visioconférence ont trouvé de nombreuses applications, tant dans le domaine professionnel que le domaine privé, ou à cheval sur les deux domaines, notamment par l'intermédiaire du télétravail. La frontière entre la sphère privée et l'environnement professionnel est ainsi devenue perméable. Ainsi, un appel vidéo peut être considéré comme une intrusion, de par les informations qu'il procure à un utilisateur sur l'environnement physique, familial ou professionnel de ses interlocuteurs. Diverses solutions ont été proposées, notamment la possibilité de flouter le fond de l'image, ou encore d'y superposer un fond virtuel. Cependant, de telles solutions ne sont pas adaptées à des situations où des personnes font une irruption intempestive dans le plan de l'image.

Le document US 2019/0147175 A1 décrit une méthode de préservation de la vie privée dans un système de transmission vidéo en temps réel. Le document EP 4211184 A1 décrit une méthode de suivi et de recadrage d'une région d'intérêt. Le document US 2020/0211201 A1 décrit un système pour traitement du premier plan et de l'arrière-plan d'une vidéo en temps réel. Le document JP 2022/143122 A décrit un système de détection de posture.

### Résumé

Un ou plusieurs modes de réalisation concernent une méthode de communication vidéo mise en œuvre par un dispositif comprenant un processeur et une mémoire comportant du code logiciel, le processeur exécutant le code logiciel conduisant le dispositif à mettre en œuvre la méthode, la méthode comprenant les étapes listées dans les revendications.

Un autre aspect concerne un dispositif comprenant un processeur et une mémoire comportant du code logiciel, le processeur exécutant le code logiciel conduisant le dispositif à mettre en œuvre l'une des méthodes décrites et notamment l'une des méthodes ci-dessus.

Un autre aspect concerne un décodeur de télévision comportant un dispositif tel que ci-dessus.

Un autre aspect concerne un produit programme d'ordinateur comportant des instructions qui lorsqu'elles sont exécutées par au moins un processeur causent l'exécution de l'une des méthodes décrites et notamment l'une des méthodes ci-dessus.

Un autre aspect concerne un support de stockage non transitoire comportant des instructions qui lorsqu'elles sont exécutées par au moins un processeur causent l'exécution de l'exécution de l'une des méthodes décrites et notamment l'une des méthodes ci-dessus.

### Brève description des figures

D'autres caractéristiques et avantages apparaîtront au cours de la lecture de la description détaillée qui va suivre pour la compréhension de laquelle on se reportera aux dessins annexés parmi lesquels :
- la figure 1 est un diagramme schématique d'un système comprenant un dispositif selon un ou plusieurs modes de réalisation.
- la figure 2 est un algorigramme d'une méthode selon un ou plusieurs exemples de réalisation ;
- la figure 3 est un diagramme schématique d'une image avant son traitement et après son traitement par une méthode selon l'un ou plusieurs modes de réalisation ;
- la figure 4 est un algorigramme de la méthode selon un ou plusieurs exemples de réalisation ;
- la figure 5 est un algorigramme détaillant des sous-étapes d'une étape de la figure 4 selon un ou plusieurs exemples de réalisation ;
- la figure 6 est un diagramme schématique illustrant la détection de corps et de visages selon un exemple de réalisation particulier ;
- la figure 7 est un diagramme schématique illustrant le principe de l'association corps-visage ;
- la figure 8 est un diagramme schématique illustrant l'obtention d'un corps fictif pour un visage non associé ;
- la figure 9 est un diagramme schématique illustrant l'obtention de deux vecteurs à partir deux visages respectifs ;
- la figure 10 est un diagramme schématique illustrant le principe de la classification selon un ou plusieurs modes de réalisation ;
- la figure 11 est un diagramme schématique illustrant deux variantes de réalisation d'un masque d'une image courante ;
- la figure 12 est un diagramme schématique illustrant les différentes étapes de la construction d'un masque mettant en œuvre une segmentation sémantique selon un exemple de réalisation ;
- la figure 13 est un diagramme schématique illustrant la composition de l'image S_t ;
- la figure 14 est un diagramme schématique illustrant le problème d'une personne non détectée car partiellement visible dans l'image capturée par la caméra ;
- la figure 15 est un diagramme schématique d'une méthode de réduction de l'impact d'une personne non détectée près d'un bord de l'image ;
- la figure 16 est un diagramme schématique illustrant l'alignement d'un visage selon un ou plusieurs exemples de réalisation.

### Description détaillée

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire non volatile ou sur un support de stockage non volatile (clé USB, carte mémoire ou autre support) lisible directement ou à travers une interface adaptée par le processeur ou contrôleur.

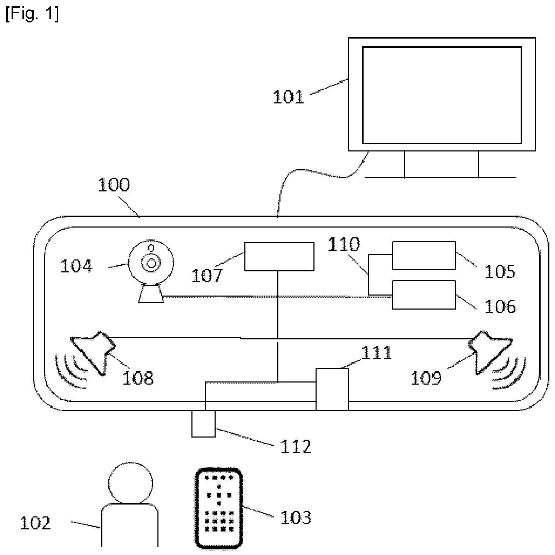

La figure 1 est un diagramme schématique d'un système illustrant un ou plusieurs modes de réalisation de façon non-limitative. Le système de la figure 1 comprend un dispositif 100 et un écran d'affichage 101. Le dispositif 100 comprend un processeur 105, une mémoire non volatile 106 comportant du code logiciel, et une mémoire de travail 107. Par ailleurs, les diverses composantes du dispositif 100 sont contrôlées par le processeur 105, par exemple via un bus interne 110.

Le dispositif 100 peut comporter par ailleurs une interface (non illustrée) par laquelle il est relié à l'écran 101. Cette interface est par exemple une interface HDMI. Le dispositif 100 est adapté à générer un signal vidéo pour affichage sur l'écran 101. La génération du signal vidéo est par exemple réalisée par le processeur 104. Le dispositif 100 comporte par ailleurs une interface 111 pour le relier à un réseau de communication, par exemple le réseau internet.

Le dispositif 100 comporte par ailleurs une caméra 104 et un microphone 112. Le code logiciel comporte une application de communication par vidéo (appel vidéo, visioconférence etc...) mettant en œuvre la caméra et le microphone.

Le dispositif 100 peut optionnellement être contrôlé par un utilisateur 102 par exemple à l'aide d'une interface utilisateur, montrée ici sous la forme d'une télécommande 103. Le dispositif 100 peut par ailleurs optionnellement comporter une source audio, illustrée deux haut-parleurs 108 et 109. Le dispositif peut optionnellement comporter une unité matérielle d'accélération neuronale ('NPU', pour 'neuronal processing unit' en langue anglaise) dont la fonction est d'accélérer les calculs nécessaires pour un réseau de neurones.

Dans certains contextes, le dispositif 100 est par exemple un récepteur / décodeur de télévision numérique, tandis que l'écran d'affichage est un téléviseur. Cependant, l'invention n'est pas limitée à ce contexte spécifique et peut être utilisée dans le cadre de toute communication vidéo, comme par exemple une application de communication par vidéo sur un téléphone portable, un ordinateur etc...

Le système de la figure 1 est donné à titre illustratif pour la clarté de présentation des exemples de réalisation et une implémentation actuelle peut comporter plus ou moins de composantes. Par ailleurs, certaines composantes décrites comme intégrés au dispositif 100 peuvent être externes à ce dispositif et reliées à lui par l'intermédiaire d'une interface adaptée - ceci est notamment le cas pour la caméra 104 ou encore le microphone 112. A contrario, certaines composantes du système décrites comme externes au dispositif 100 peuvent être intégrées dans le dispositif - par exemple l'écran d'affichage ou encore l'interface utilisateur 103.

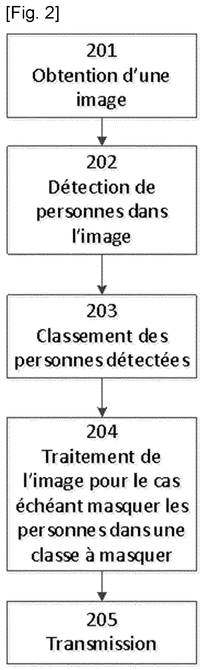

La figure 2 est un algorigramme d'une méthode selon un ou plusieurs exemples de réalisation. En 201, une image est capturée par la caméra 104. En 202, l'image est analysée pour détecter si une ou plusieurs personnes sont présentes. En 203, un classement des personnes détectées est réalisé. Ce classement indique si une personne doit être masquée ou non. L'image est transformée en 204 pour masquer, le cas échéant, les personnes qui doivent l'être.

L'image résultante est alors prête pour transmission à un ou plusieurs destinataires, en 205. Cette transmission peut être précédée d'autres traitements de l'image et/ou des images précédentes et suivantes, comme la compression, l'ajout d'éléments dans l'image etc...

Dans ce qui suit, on désignera par 'personne non-autorisée' ('PN') une personne à masquer et par 'personne autorisée' ('PA') une personne à ne pas masquer.

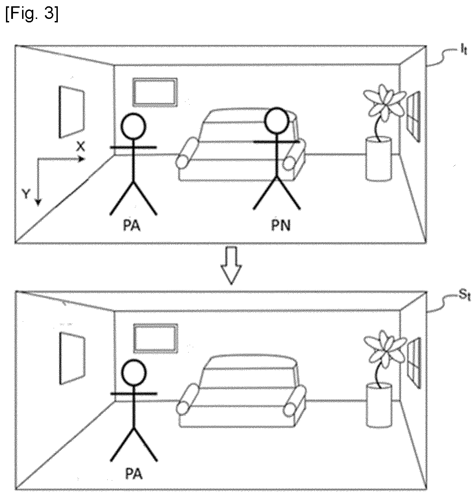

La figure 3 illustre schématiquement une image avant son traitement (l_t, image en haut) et après son traitement (St, image en bas). L'image I_t montre une pièce filmée par la caméra. Dans cette pièce se trouvent deux personnes, dont l'une est autorisée ('PA') et l'autre n'est pas autorisée ('PN'). Dans l'image transformée, la personne non autorisée est masquée, c'est à dire qu'elle est cachée. Dans l'exemple de la figure 3, la personne PN est remplacée par le fond de la pièce qui apparaîtrait si la personne PN était absente.

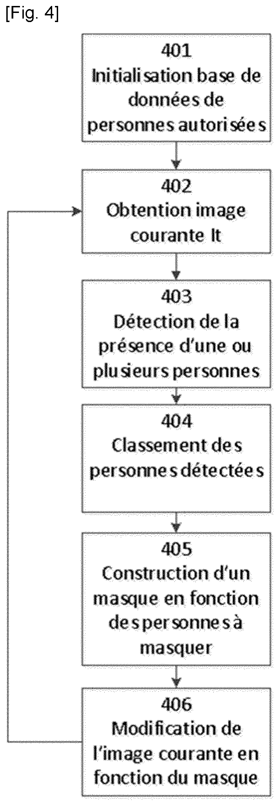

La figure 4 est un algorigramme de la méthode selon un ou plusieurs exemples de réalisation. Cet algorigramme est plus détaillé que celui de la figure 2.

En 401, une base de données des personnes autorisées est initialisée.

Selon un ou plusieurs exemples de réalisation, la base de données comporte un vecteur identifiant une personne à l'aide de données caractéristiques du visage de cette personne. Cette base de données est stockée par exemple dans la mémoire de travail du dispositif 100.

En 402, le dispositif 100 obtient une image courante à l'instant 't', notée l_t comme ci-dessus, pendant un appel vidéo.

En 403, le dispositif 100 met en œuvre un procédé de détection de personnes dans l'image courante I_t. Cette détection fournit en sortie, pour chaque personne détectée, notamment un ou plusieurs paramètres permettant de caractériser chaque personne et de les distinguer entre elles. La détection de personnes fournit aussi des informations localisant chaque personne dans l'image.

Selon un ou plusieurs exemples de réalisation donnés à titre non limitatif, cette détection comporte :
- Une détection de corps et de visages dans l'image
- Une association visage-corps
- Une vectorisation des visages, les vecteurs étant aptes à permettre une comparaison avec les vecteurs dans la base de données et ainsi les classer.

En 404, les vecteurs des visages sont classés dans la base de données contenant les vecteurs des personnes autorisées. Le classement indique si une personne est autorisée ou non, c'est-à-dire si elle doit rester présente dans l'image ou au contraire être masquée. En 405, le dispositif 100 construit un masque pour l'image I_t, noté M_t, permettant, une fois combiné avec l'image I_t, de masquer les personnes qui doivent l'être, si de telles personnes ont été détectées.

Selon un ou plusieurs exemples de réalisation, le masque M_t est fonction de :
- Des résultats de la classification en 404
- Des données en sortie des détections des corps et des visages dans en 403
- De l'image capturée I_t

En 406, l'image S_t est générée en fonction du masque Mt, de l'image I_t et de l'image S_t-1, à savoir l'image modifiée résultant de l'itération précédente du procédé de la figure 4. On enregistre par ailleurs l'image S_t.

On traite ensuite l'image suivante, en retournant en 402.

Les différentes étapes du procédé de la figure 4 vont maintenant être détaillées.

L'étape 401 comprend l'initialisation d'une base de données B_Temp configurée pour permettre le classement d'une personne en tant que personne autorisée ou non autorisée.

Selon un exemple de réalisation, la base de données comporte par exemple une liste d'une ou plusieurs personnes autorisées, avec pour chaque personne autorisée, un identifiant 'i' et un vecteur 'D_ij' associé à la personne i, le vecteur comportant les caractéristiques permettant de distinguer la personne i d'autres personnes. Une personne non présente dans la liste sera par défaut considérée comme non autorisée.

Selon une variante de réalisation, une personne peut être représentée par plusieurs vecteurs (correspondant par exemple à différentes photos du visage de la personne).

Selon un exemple de réalisation, la base de données B_Temp est initialisée en recopiant les données d'une autre base de données, B_Globale, présente dans la mémoire non volatile du dispositif 100. B_Globale comporte par exemple une liste de personnes autorisées de manière permanente, ainsi que pour chacune de ces personnes, un vecteur tel que décrit ultérieurement.

Les propriétés des vecteurs ainsi que leur utilisation pour la classification seront décrits plus en détail plus loin.

L'étape 402 comprend la capture d'une scène filmée par la caméra 104. Cette capture est effectuée par exemple lors d'un appel vidéo. Une image fait partie d'une suite de trames vidéo, chaque image de la suite étant traitée successivement dans le cadre de la méthode décrite, avant transmission de la vidéo constituée par les images traitées et le cas échéant modifiées à un ou plusieurs destinataires.

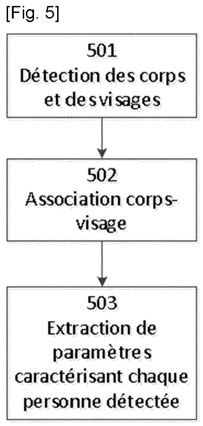

L'étape 403 concerne la détection de personnes dans l'image. Elle comporte l'extraction d'informations nécessaires pour les étapes suivantes, à savoir les informations nécessaires pour classer les personnes présentes, et d'informations aidant le cas échéant au masquage, dans l'image, des personnes à masquer. Selon un exemple de réalisation, ces dernières informations décrivent les parties de l'image occupées par une personne. Trois sous-étapes 501 à 503 seront décrites, à savoir la détection des corps et des visages (501), l'association corps-visage (502) et l'extraction des paramètres caractérisant chaque personne (503). Ces sous-étapes sont illustrées à la figure 5.

L'étape 501 a pour but de réaliser la détection des corps et des visages présents dans l'image.

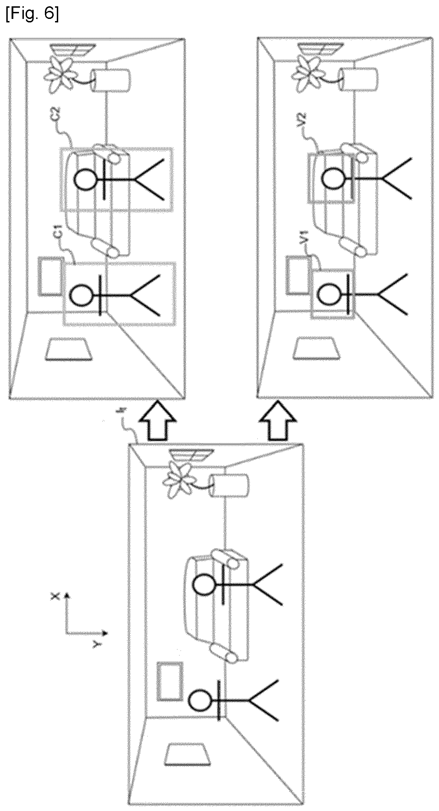

La figure 6 est un diagramme schématique illustrant la détection de corps et de visages selon un exemple de réalisation particulier. La figure 6 comporte une image I_t à traiter. La détection de corps délimite une ou plusieurs zones C_i comportant des corps et la détection des visages délimite une ou plusieurs zones V_i comportant des visages. Dans l'exemple de la figure 6, les zones sont des zones rectangulaires, aussi appelées boîtes englobantes, avec V_i = {(X_vi1, Y_vi1),(X_vi2,Y_vi2)} et C_i = {(X_ci1, Y_ci1),(X_ci2,Y_ci2)} dans le repère de l'image.

Selon un exemple de réalisation particulier, des algorithmes connus en soi sont mis en œuvre pour cette détection des corps et des visages. Pour la détection tant des corps que des visages, la méthode de Viola-Jones, encore appelée 'cascade de Haar' peut être utilisée. Pour la détection de visages, le réseau de neurones 'BlazeFace' [1] peut également être utilisée. Pour la détection de corps, le réseau de neurones 'EfficientDet' [2] peut être utilisée. Ces deux réseaux neuronaux fournissent en sortie les boîtes englobantes C_i et V_i. Le réseau 'BlazeFace' donne en sortie les coordonnées des boîtes englobantes des visages, ainsi que la position de douze points repères (deux pour la bouche, quatre pour les oreilles, quatre pour les yeux et deux pour le nez). Le réseau 'EfficientDet' donne en sortie le nombre et le type d'objets détectés, et les boîtes englobantes dans l'image.

Dans l'exemple donné, une zone délimitant un corps contient le corps complet, c'est-à-dire également le visage.

L'étape 502 a pour but de réaliser une association cohérente du corps 'C_i' et du visage 'V_j' pour une même personne 'P_n'. On obtient ainsi des ensembles P_n = {V_i, C_j}.

Cette association peut par exemple être réalisée sur base des zones détectées lors de l'étape précédente. Selon un mode de réalisation particulier, l'association d'un visage V_i et d'un corps C_j comprend le calcul du ratio entre la surface d'intersection du visage V_i avec le corps C_j par rapport à la surface du visage V_i. Un corps C_j est associé au visage V_i avec lequel il possède le plus grand ratio.

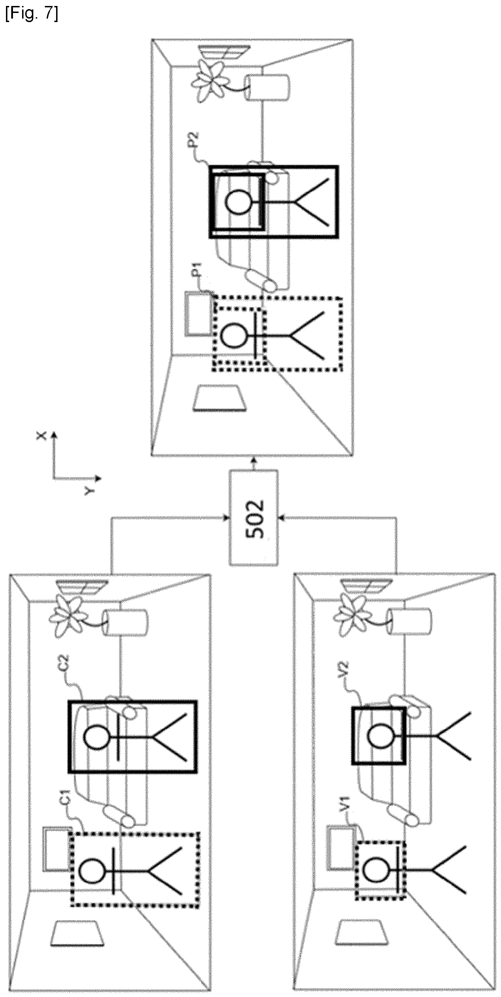

La figure 7 est un diagramme schématique illustrant le principe de l'association corps-visage.

Selon une variante de réalisation, une condition supplémentaire est que le ratio soit plus grand qu'un seuil. A titre d'exemple illustratif et non limitatif, dans certaines applications, ce seuil peut être égal à 0,7.

A titre d'exemple, le pseudocode suivant peut être utilisé pour déterminer l'association d'un corps avec un visage. Les corps sont indexés avec l'index indx_c. Les visages sont indexés avec l'index indx_v, max_ratio représente le ratio maximum et max_indx représente l'index du visage correspondant au ratio maximum. max_indx et max_ratio sont mis à jour au fur et à mesure du calcul du ratio de surfaces pour un corps donné lors d'une boucle dans laquelle chaque visage est considéré tour à tour. Cette boucle sur les visages est réalisée pour chaque corps.

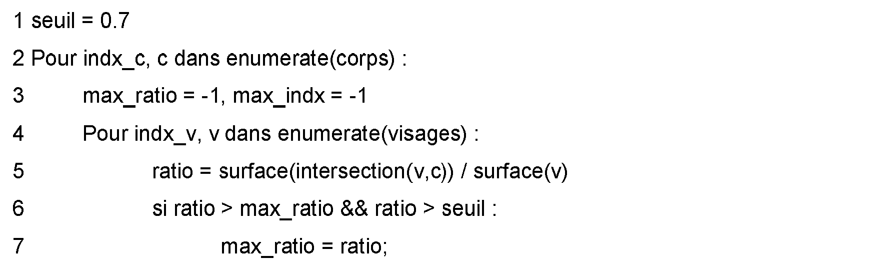

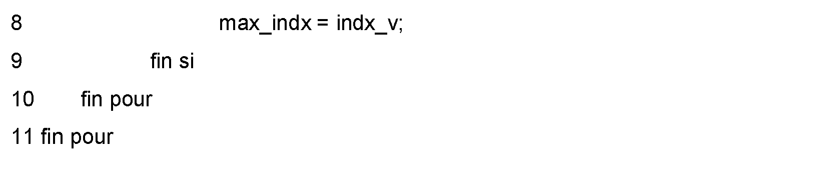

A la fin de l'étape 502, chaque personne P_n est alors représentée par un maximum de deux boîtes englobantes, l'une pour le visage, l'autre pour le corps.

Selon une variante de réalisation, afin d'éviter d'associer un même visage avec plusieurs corps, on exclut un visage associé des itérations pour le ou les corps suivants, c'est-à-dire qu'une fois associé avec un corps, un visage ne peut être associé avec un autre corps.

Selon une variante de réalisation, il est considéré le cas où un ou plusieurs visages ne sont pas associés à un corps. Cela peut arriver par exemple si la détection des corps et des visages donne plus de visages que de corps. Dans ce cas, une personne n'est représentée que par un visage, soit P_n = {V_i}. Il est proposé d'associer un corps fictif à un tel visage, pour que la personne concernée soit représentée tant par un visage que par un corps, pour la suite de la méthode.

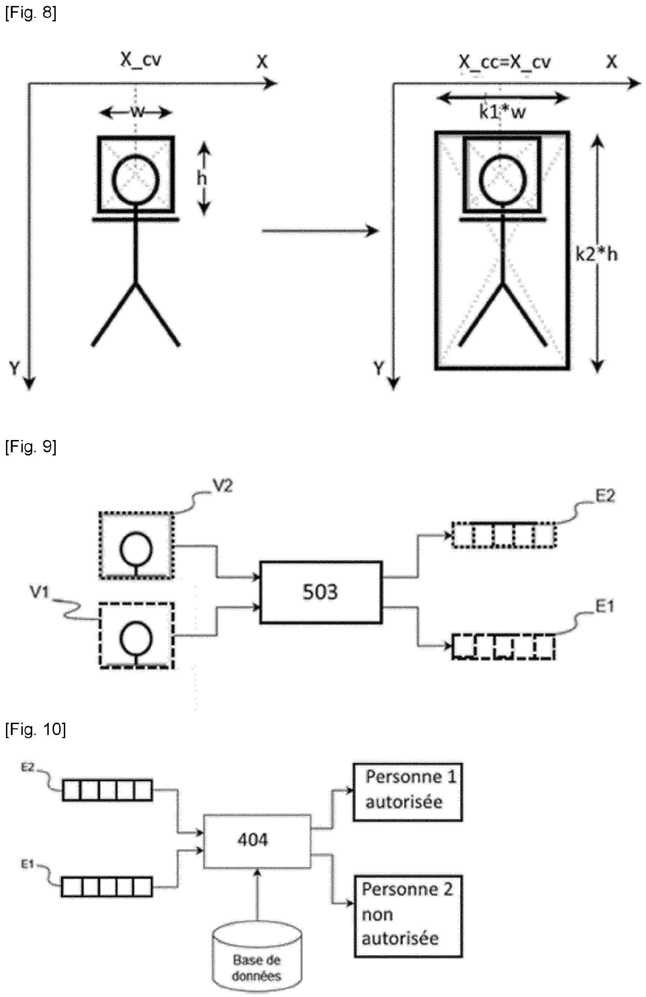

La figure 8 est un diagramme schématique illustrant l'obtention d'un corps fictif pour un visage non associé. Dans l'exemple de la figure 8, les dimensions du corps fictif sont fonction de la taille du visage. Ceci est particulièrement simple à réaliser dans le cas où le visage et le corps sont considérés comme englobés dans des boîtes rectangulaires. Les dimensions de la boîte englobante du visage sont notées w pour la largeur et h pour la hauteur. Les dimensions de la boîte englobante du corps fictif résultent de la multiplication de la largeur w par un coefficient K1 et de hauteur h par un coefficient K2. A titre d'exemple illustratif non limitatif, K1 peut être pris égal à 2 et K2 égal à 8. Par exemple, si on désigne par C' le corps fictif et (X_{'cj1},Y'_{cj1}), (X'_{cj2},Y'_{cj2}) respectivement les coordonnées du point supérieur gauche et du point inférieur droit de la boîte englobante correspondante, on peut par exemple obtenir ces coordonnées en appliquant. [Math. 1] $w = {X}_{vi 2} - {X}_{vi 1}$ [Math. 2] $h = {Y}_{vi 2} - {Y}_{vi 1}$ [Math. 3] $X {′}_{cj 1} = {X}_{vi 1} - \frac{\left({X}_{vi 2}-{X}_{vi 1}\right) \times \left(1+K1\right)}{2}$ [Math. 4] $Y {′}_{cj 1} = {Y}_{vi 1}$ [Math. 5] $X {′}_{cj 2} = {X}_{vi 2} + \frac{\left({X}_{vi 2}-{X}_{vi 1}\right) \times \left(1+K1\right)}{2}$ [Math. 6] $Y {′}_{cj 2} = {Y}_{vi 1} + K 2 \times \left({Y}_{vi 2}-{Y}_{vi 1}\right)$

D'autres façons de déterminer un corps fictif peuvent être envisagées.

Selon une variante de réalisation, on détecte les surfaces correspondant aux corps, puis on détecte pour chaque corps le visage correspondant à l'intérieur de la surface du corps. Le visage détecté dans la surface du corps est alors directement associé au corps correspondant.

L'étape 503 comporte l'extraction d'un visage des paramètres caractérisant une personne.

Selon un mode de réalisation, cette étape utilise le principe du plongement ('embedding' en langue anglaise), qui comprend la génération d'un vecteur de taille N depuis une image afin de l'identifier de manière unique. Un calcul de distance entre deux vecteurs, donc deux images, permet de statuer sur le fait que ces deux images sont similaires ou non. Selon un mode de réalisation non limitatif, un calcul de distance en cosinus est utilisé. D'autres façons de calculer une distance entre vecteur peuvent cependant être utilisées. Deux visages dont les vecteurs sont proches en distance identifient une même personne.

Une vectorisation est effectuée pour les visages V_i. Cette vectorisation peut être effectuée à l'aide d'outils connus en tant que tel. Par exemple, le réseau de neurones de reconnaissance faciale présent dans 'Dlib' [3], une librairie de l'état de l'art contenant des outils d'apprentissage machine, peut être utilisé pour la vectorisation. Une implémentation transforme une image de 150x150 pixels en un vecteur de taille 128.

A la sortie de cette phase de vectorisation, chaque personne P_i présente dans la scène est présentée par deux boîtes englobantes C_i et V_i, et un vecteur E_i de taille N dérivé du visage V_i, tel que présenté en figure 9, qui est un diagramme schématique illustrant l'obtention de deux vecteurs E1 et E2 à partir de visages respectifs V1 et V2.

Optionnellement, une boîte englobante de visage est soumise à un prétraitement avant la vectorisation. Ce prétraitement consiste en un redressement ou alignement du visage en utilisant les repères dans le visage. Cet alignement permet d'obtenir des vecteurs à distance moindre pour différentes images du visage d'une même personne. L'alignement consiste à effectuer une transformation de l'image du visage, par exemple une rotation, pour qu'il soit sensiblement vertical.

En revenant à la méthode dont l'algorigramme est donné en figure 4, il est procédé en 404 à une classification des visages, comprenant la détermination, pour chaque personne détectée, s'il s'agit d'une personne autorisée ou non autorisée.

Selon un mode de réalisation, cette étape comprend l'utilisation des vecteurs E_i précédemment obtenus. La figure 10 est un diagramme schématique illustrant le principe de la classification selon un ou plusieurs modes de réalisation.

La base B_Temp peut être constituée de différentes manières et évoluer au cours du temps. Il est à noter que les différentes possibilités ci-dessous ne sont pas exclusives les unes des autres et peuvent être combinées dans une même implémentation.
- La base de données B_Temp peut être initialisée avec des données présentes dans une autre base de données (voir plus haut).
- La base de données B_Temp peut être augmentée avec les personnes présentes au début de l'appel vidéo, par exemple dans les trente premières secondes. Ces personnes sont alors automatiquement des personnes autorisées. Pour chacune de ces personnes, un ou plusieurs vecteurs E sont enregistrés dans B_Temp. Ces personnes sont alors autorisées pour la durée de la communication vidéo, ou selon une variante de réalisation, tant qu'elles ne sortent pas de la scène filmée.

Dans le cas où B_Temp n'est initialement pas vide, le dispositif 100 détermine pour chaque vecteur E_i si la base de données comporte un vecteur suffisamment proche pour conclure que le vecteur E_i correspond à une personne listée dans la base. Selon le présent exemple de réalisation, pour ce faire, le dispositif 100 calcule la distance entre chaque vecteur E_i et les vecteurs D_j déjà présentes dans B_Temp. Si pour un vecteur E_i, un vecteur D_j est suffisamment proche - par exemple la distance cosinus est inférieure à un seuil ε, (avec par exemple ε = 0.1) - la personne « i » est considérée comme autorisée. A contrario, si pour un vecteur E_i, aucun vecteur proche n'est trouvé dans la base, alors la personne « i » est considérée comme non-autorisée.

Optionnellement, si une personne est déterminée comme n'étant pas autorisée, il est demandé à l'utilisateur s'il souhaite rajouter cette personne comme personne autorisée dans la base B_Temp.

Optionnellement, à la fin d'un appel vidéo, il est demandé à l'utilisateur s'il souhaite rajouter dans la base de données permanente B_Globale une ou plusieurs personnes présentes dans la base de données temporaire B_Temp mais non encore présentes dans la base de données permanente B_Globale.

Optionnellement, une interface utilisateur est prévue pour qu'un utilisateur puisse éditer la base B_Globale, l'édition comprenant notamment la possibilité d'enlever des personnes autorisées.

Selon une variante de réalisation, les personnes pour lesquelles aucun visage n'est détecté en 403 seront considérées automatiquement comme non-autorisées.

Le fait que toutes les personnes présentes dans la base de données B_Temp sont considérées comme autorisées n'est pas limitatif : alternativement il est possible de mettre en œuvre un mécanisme de construction d'un sous-ensemble P'K des personnes autorisées depuis l'ensemble des personnes Pi présentes dans la base de données de manière à n'autoriser qu'un sous-ensemble de personnes. Cette construction peut se faire sur la base d'un ou plusieurs critères, comme par exemple le type de communication, certaines personnes étant indiquées dans la base comme étant autorisées pour certains types de communication uniquement.

Les étapes 405 et 406 comprennent le traitement de l'image I_t pour rendre invisibles les personnes non autorisées.

Selon un exemple de réalisation, ce traitement comprend la création d'un masque (405) et l'application du masque à l'image (406). D'autres implémentations peuvent être envisagées, notamment en une seule étape.

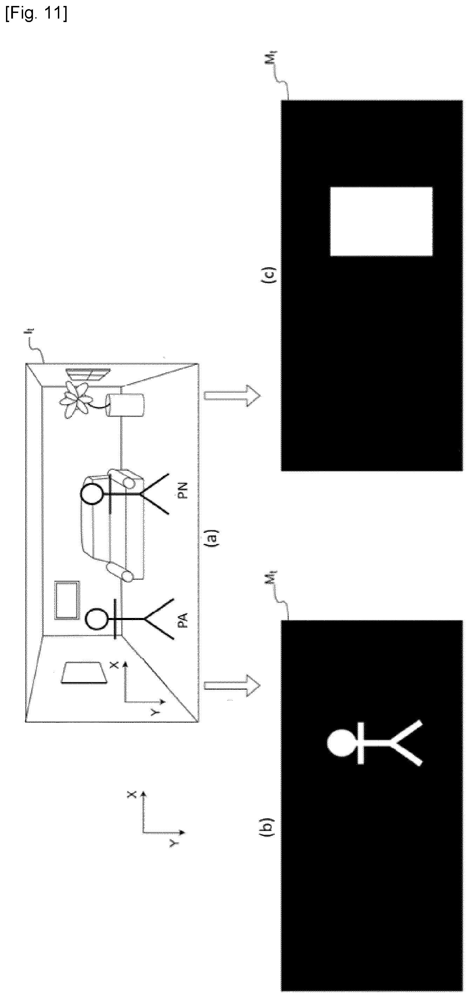

La figure 11 est un diagramme schématique comprenant une image (a), qui est une image courante I_t, une image (b) qui est un masque résultant d'une segmentation de l'image (a) selon une première variante de réalisation et une image (c) résultant d'une seconde variante de réalisation. La première variante de réalisation comprend une segmentation sémantique de l'image et la seconde ne comprend pas de segmentation sémantique.

Un masque est une image binaire, utilisée pour définir un ensemble de pixels d'intérêt dans une image d'origine. Le masque est par exemple défini par :
Masque (i,j) = 1 si le pixel Image(i,j) est un pixel d'intérêt, et
Masque (i,j) = 0 sinon.

Dans le présent exemple de réalisation, l'image d'origine est l'image I_t et les pixels d'intérêt sont les pixels correspondant à des personnes non-autorisées. Le masque a les mêmes dimensions que l'image I_t, mais dans d'autres implémentations, cela n'est pas forcément le cas. Par exemple, l'image d'origine peut résulter d'un redimensionnement de l'image I_t, et le masque sera alors plus petit ou plus grand en termes de pixels que l'image I_t.

L'étape 404 de construction de masque met en œuvre les résultats de l'étape de détection 403 et de l'étape de classement 404.

Dans le cas de la première variante de réalisation, un algorithme de segmentation connu en soi peut être utilisé pour construire le masque. Les pixels d'intérêt concernent alors assez précisément à la partie de l'image correspondant à la personne. Cet algorithme peut être à base de réseaux de neurones, comme par exemple l'algorithme DeepLabV3 [4]. La seconde variante de réalisation ne met pas en œuvre de segmentation sémantique. Par exemple, le masque est alors obtenu en considérant comme pixels d'intérêt les pixels des boîtes englobantes correspondant à une personne. Cette variante a l'avantage d'être d'une mise en œuvre moins exigeante en ressources de calcul.

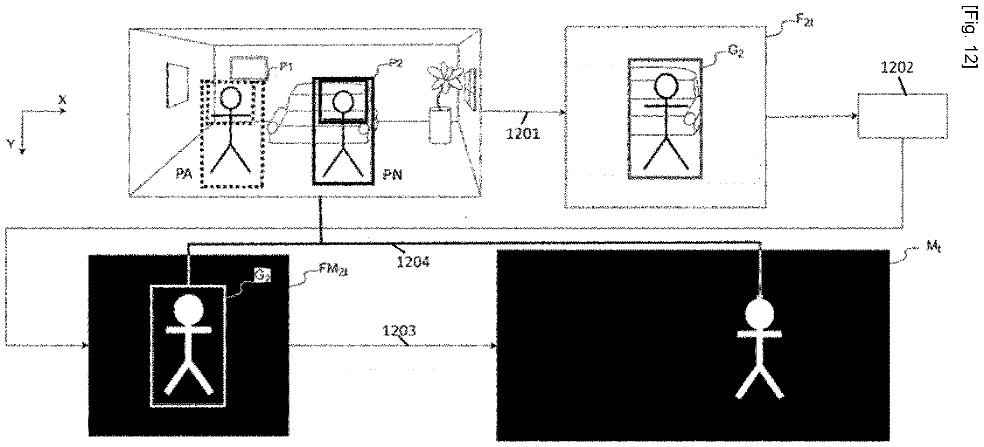

La construction d'un masque selon la première variante de réalisation va maintenant être décrite. La segmentation sémantique comprend l'association d'un label à chaque pixel de l'image. Dans le cadre du présent exemple de réalisation, le label d'intérêt est le label 'Personne'. La figure 12 est un diagramme schématique illustrant les différentes étapes de la construction d'un masque mettant en œuvre une segmentation sémantique selon un exemple de réalisation.

Dans un premier temps, une extraction 1201 des zones d'image contenant les personnes non-autorisées de l'image d'origine est effectuée. Ces zones sont placées chacune dans une image intermédiaire F_it, en l'occurrence F_2t dans l'exemple de la figure. L'extraction est faite en utilisant les coordonnées des boîtes englobantes du visage et du corps de ces personnes. Le processus trouve premièrement les coordonnées des boîtes englobantes d'extraction dites « G_i » définies par : $X _ 1 Gi = min \left(X_ci1, X_vi1\right)$ $Y _ 1 Gi = min \left(Y_ci1, Y_vi1\right)$ $X _ 2 Gi = max \left(X_ci2, X_vi2\right)$ $Y _ 2 Gi = max \left(Y_ci2, Y_vi2\right)$ où V_i et C_i sont les boîtes englobantes du visage et du corps de la personne P_i classée non autorisée. La taille de l'image intermédiaire F_it est alors définie. Dans cette implémentation, F_it est une image où tous les pixels ont les mêmes couleur (blanc, dans exemple de la figure 12). Cette image a par exemple un rapport de forme 1:1 et une hauteur qui vaut K*max((Y_2Gi - Y_1Gi), (X_2Gi - X1_Gi)). K peut par exemple être pris égal à 2, à titre d'exemple illustratif. Le processus place ensuite la boîte englobante «G_it» extraite de l'image I_t, dans le centre de l'image F_it. Les images F_it passent ensuite à l'étape de segmentation 1202 pour générer les masques FM_it. Les boîtes englobantes d'extraction « G_i » sont ensuite utilisées en 1203 pour extraire les pixels d'intérêt des FM_it, et les placer dans M_t. La référence 1204 indique le placement des parties d'intérêt des FM_it dans M_t à la même position que dans l'image I_t.

Dans la construction d'un masque selon la première variante de réalisation, le masque est construit sans segmentation sémantique. Selon cette variante, les boîtes englobantes G_i, et construit le masque M_t sont obtenues, en considérant simplement que tous les pixels à l'intérieur de ces boîtes correspondent à des personnes non-autorisées et sont donc des pixels d'intérêt.

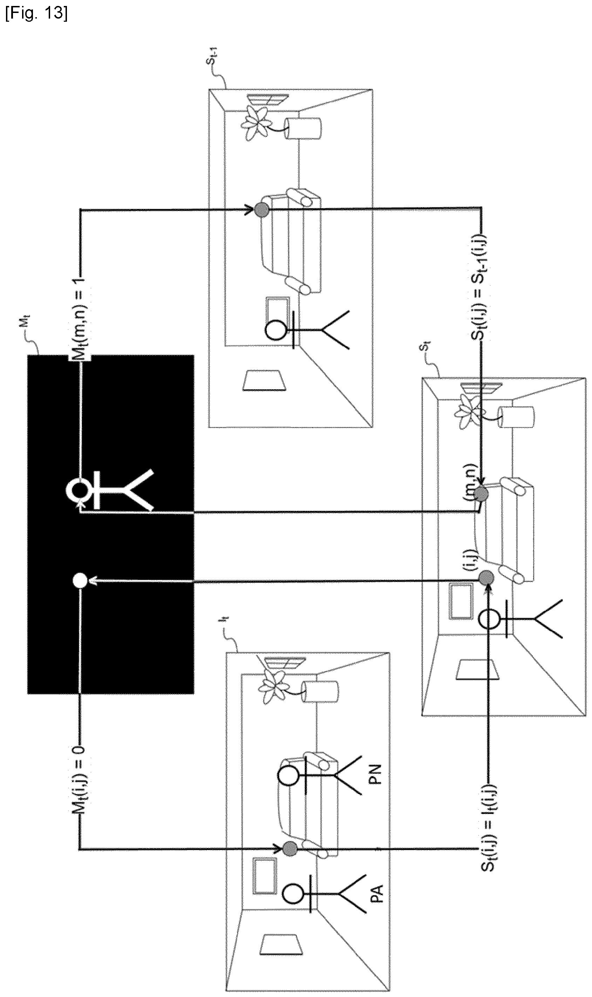

Une fois le masque M_t construit, l'image finale traitée S_t peut être obtenue. La figure 13 est un diagramme schématique qui illustre la composition de l'image finale.

Les données en entrée de cette étape comprennent :
- le masque généré M_t ;
- l'image S_t-1 envoyée à l'instant t-1 ;
- l'image I_t capturée à l'instant t.

Pour construire l'image S_t, la formule suivante est appliquée : S_t = M_t * S_t-1 + (1-M_t) * I_t.

Cette formule signifie que :
1. La valeur du pixel (i,j) de l'image S_t est égale au pixel (i,j) dans l'image I_t si M_t(i,j) = 0.
2. La valeur du pixel (i,j) de l'image S_t est égale au pixel (i,j) dans l'image S_t-1 si M_t(i,j) = 1.

L'image S_t est stockée en mémoire volatile pour l'itération suivante.

La figure 13 est un diagramme schématique illustrant la composition de l'image S_t. Selon I invention recendiquée, les images S_t-1 sont initialisées (à t=0) avec une image de la scène filmée par la caméra dépourvue de personnes. Selon un autre mode de réalisation, les personnes présentes au début de la communication sont autorisées automatiquement. Selon encore un autre mode de réalisation, l'image initiale S_0 est simplement une image noire.

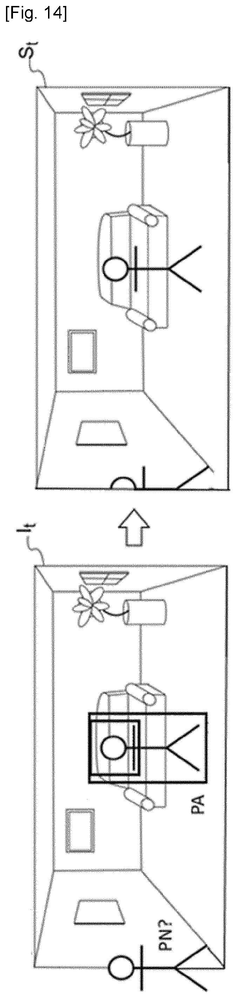

La suppression d'une personne dans l'image suppose sa détection préalable. Une mauvaise détection, ou une non-détection, peut produire des effets visuels indésirables. Un cas où ce problème peut apparaître est quand personne est partiellement visible dans la scène filmée, par exemple lorsqu'elle se trouve positionnée sur le bord de l'image I_t et n'est que partiellement capturée par la caméra. La figure 14 est un diagramme schématique illustrant l'image capturée I_t et l'image S_t résultante, où une personne potentiellement non autorisée est à cheval sur le bord de l'image I_t et n'est pas effacée dans l'image S_t.

Selon un mode de réalisation, le traitement de l'image comprend un recadrage qui élimine des bandes autour de l'image à transmettre, c'est-à-dire au moins les bandes latérales des deux côtés et selon certains modes également des bandes au-dessus et en dessous. Dans le cadre des exemples précédemment illustrés, ce recadrage est donc appliqué à l'image S_t - il en résulte une image S'_t. La largeur des bandes supprimées est choisie pour qu'une personne rentrant dans l'image n'apparaisse pas dans l'image recadrée - du moins si la personne rentre par un bord de l'image. La largeur des bandes supprimées peut aussi être simplement un pourcentage des dimensions, par exemple 5% de la largeur ou de la hauteur de l'image. Le recadrage créé une marge de détection plus grande, afin d'augmenter les chances d'une bonne détection pour les personnes au bord de l'image non traitée.

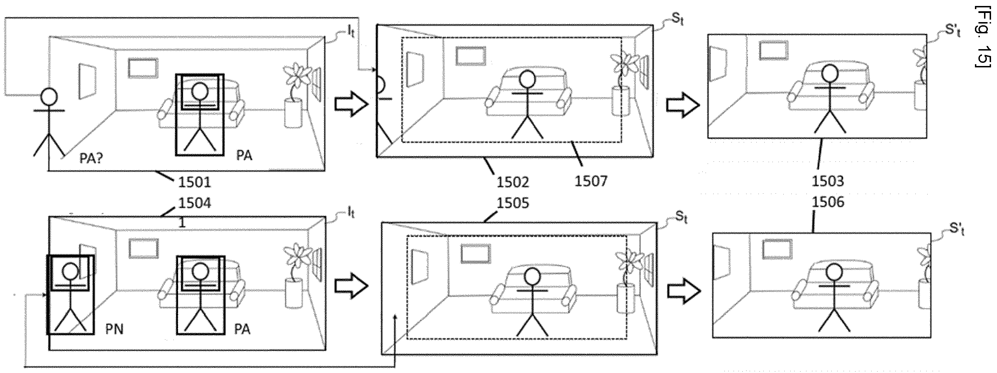

La figure 15 est un diagramme schématique d'une méthode de réduction de l'impact du problème mentionné ci-dessus.

Les images 1501 à 1503 illustrent un exemple dans lequel il n'est pas possible de détecter une personne et de déterminer si cette personne ('PA ?') est autorisée ou non. Dans l'image 1501, cette personne n'est située qu'à moitié dans l'image l_t. Le traitement décrit plus haut est alors appliqué à l'image 1501 pour produire l'image traitée 1502. Dans le cas de l'image 1501, la personne en bordure d'image n'est pas détectée et n'est donc pas effacée. Un recadrage est effectué pour éliminer au moins les bandes latérales. Dans l'image S'_t 1503 obtenue, la personne non détectée n'apparaît pas. C'est l'image S'_t qui sera transmise.

Les images 1504 à 1506 illustrent un exemple dans lequel il est possible de détecter la personne pénétrant dans la scène filmée. L'image 1504 peut correspondre à la situation de l'image 1501 - la personne s'est avancée vers le centre de la pièce. La zone du visage détectée est alors suffisantes pour déterminer le statut autorisé/non-autorisé de la personne. Dans l'exemple des images 1504 à 1506, cette personne n'est pas autorisée. Dans l'image traitée 1505, la personne aura été rendue invisible par application du traitement décrit plus haut. Un recadrage de l'image est cependant réalisé pour obtenir une image S'_t 1506 au même format que l'image 1503. Si la personne non autorisée pénètre encore plus dans la pièce, elle demeurera invisible dans les images S' ultérieures.

Il est à noter qu'un floutage n'efface pas une personne (ne rend pas la personne invisible), au sens d'absence d'information graphique de cette personne.

Selon un mode de réalisation particulier, le fond réel de l'image, tel que filmé par la caméra, est remplacé par un fond virtuel. Le traitement applique est similaire que celui de la figure 4, avec les modifications suivantes :
Dans l'étape 404 :
   - La construction du masque est effectuée avec une segmentation sémantique.
   - La ou les personnes autorisées deviennent les éléments d'intérêt, et le ou les masques sont obtenus pour ces personnes et non les personnes non-autorisées.
Dans l'étape 405 :
   - La composition de l'image S_t est effectuée en utilisant le masque M_t, l'image capturée à l'instant t, I_t, et une image de fond virtuel.
Dans l'étape 406 :
   - L'image transmise S_t n'a pas besoin d'être gardée en mémoire pour le traitement de l'image capturée suivante.

Selon une variante de réalisation, il est donné la possibilité de basculer entre le fond réel de l'image de la caméra et un fond virtuel.

Les repères d'un visage sont des points spécifiques sur le visage d'un être humain. Ces points sont souvent placés autour du visage, des yeux et de la bouche. La localisation de tels points peut être réalisée à l'aide de procédés de traitement d'image connus en soi. Le nombre points utilisés dépend de l'application et du contexte. Il existe des modèles, tels qu'un modèle utilisé par l'algorithme 'Blazeface' mentionné précédemment, basés sur six points. L'outil 'DLib' mentionné précédemment contient des outils capables d'utiliser soixante-huit points.

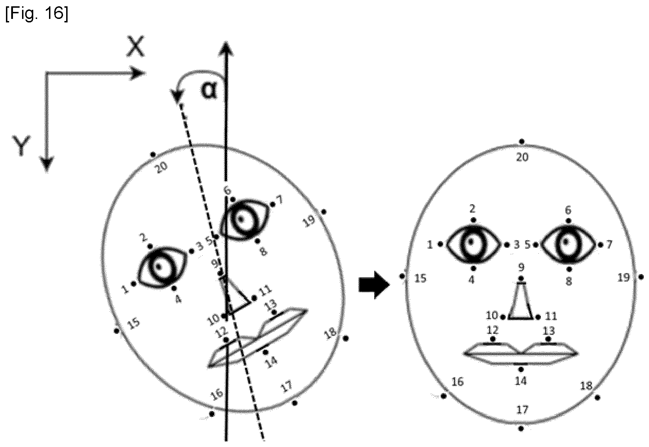

Comme mentionné précédemment, afin d'améliorer la vectorisation du visage, un alignement du visage peut être réalisé avant la vectorisation. La figure 16 est un diagramme schématique illustrant l'alignement d'un visage selon un ou plusieurs exemples de réalisation. Le visage de la figure 16 comporte vingt repères. Le principe de l'alignement consiste à redresser le visage pour mettre sur une ligne des repères symétriques par rapport à l'axe de symétrique vertical du visage, par exemple les points 2 et 6 au-dessus des yeux, ou encore des repères devant se trouver sur l'axe de symétrie du visage, comme les points 17 et 20. A partir de tels points, un angle de rotation alpha du visage par rapport à la verticale est déterminé. L'image du visage est ensuite transformée par une opération de rotation d'angle alpha pour le redresser à la verticale.

Un exemple concerne une méthode de communication vidéo mise en œuvre par un dispositif (100) comprenant un processeur (107) et une mémoire (105) comportant du code logiciel, le processeur exécutant le code logiciel conduisant le dispositif à mettre en œuvre la méthode, la méthode comprenant :
- l'obtention (201) d'une image (I_t) générée par une caméra;
- la détection (202) d'une ou plusieurs personnes (PA, PN) dans l'image ;
- en cas de détection d'une ou plusieurs personnes, la vérification (203) pour chaque personne d'un critère indiquant si la personne doit ou ne doit pas faire partie de la communication vidéo ;
- le traitement (204) de l'image pour effacer de l'image la ou les personnes détectées ne devant pas faire partie de la communication vidéo;
la transmission (205) de l'image traitée (S_t, S'_t).

### [Références]

[1] Bazarevsky et al., 'BlazeFace' - Article "BlazeFace: Sub-millisecond Neural Face Detection on Mobile GPUs" ('BlazeFace : Détection neurale de visage en dessous de la milliseconde sur unités de traitement graphiques mobiles') - July 14, 2019 - https://arxiv.org/abs/1907.05047
   Une implémentation est disponible dans
   https://developers.google.com/mediapipe/solutions/vision/face_detector
[2] Tan et al., 'EfficientDet' - Article "EfficientNet: Rethinking Model Scaling for Convolutional Neural Networks" ('EfficientDet: Repenser l'extension de modèles pour des réseaux neuronaux convolutionnels') - Sept. 11, 2020 - https://arxiv.org/abs/1905.11946
[3] 'DLib'https://github.com/davisking/dlib-models, et notamment dlib_face_recognition_resnet_model_v1 pour le plongement ('embedding' en anglais) et shape_predictor_68_face_landmarks pour la détection des repères d'un visage.
[4] Chen et al., 'Rethinking Atrous Convolution for Semantic Image Segmentation' ('Repenser la convolution atrous pour la segmentation sémantique des images') - Dec. 5, 2017 - https://arxiv.org/abs/1706.05587 Une implémentation de DeepLabV3 est disponible dans https://tfhub.dev/tensorflow/lite-model/deeplabv3/1/metadata/2

## Revendications

1. Méthode de communication vidéo mise en œuvre par un dispositif (100) comprenant un processeur (107) et une mémoire (105) comportant du code logiciel, le processeur exécutant le code logiciel conduisant le dispositif à mettre en œuvre la méthode, la méthode comprenant :
- l'obtention (201) d'une image (I_t) générée par une caméra;
- la détection (202) d'une ou plusieurs personnes (PA, PN) dans l'image, la détection comprenant l'identification (501) d'une ou plusieurs premières zones de l'image (V_i), chaque première zone comprenant un visage;
**caractérisé par**
- l'identification (501) d'une ou plusieurs secondes zones de l'image (C_i), chaque seconde zone comprenant un corps et l'association (502), en fonction d'un critère d'association, d'une première zone et d'une seconde zone pour former une représentation d'une personne (P_i) dans l'image ;
- en cas de détection d'une ou plusieurs personnes, la vérification (203) pour chaque personne d'un critère indiquant si la personne doit ou ne doit pas faire partie de la communication vidéo ;
- le traitement (204) de l'image pour effacer de l'image la ou les personnes détectées ne devant pas faire partie de la communication vidéo, le traitement de l'image comprenant l'obtention d'un masque (M_t) à partir des représentations de personnes ne devant pas faire partie de la communication vidéo, et l'obtention d'une image traitée en fonction du masque, de l'image (I_t) obtenue à partir de la caméra et d'une image traitée (S_t-1) obtenue précédemment et contenant le fond de l'image qui apparaîtrait si la ou les personnes étaient absentes, sur la base d'une image initiale d'une scène filmée par la caméra dépourvue de personnes, l'effacement comprenant le remplacement du masque par le fond de l'image qui apparaîtrait si la ou les personnes étaient absentes ;
- la méthode comprenant, suite au traitement de l'image pour effacer de l'image la ou les personnes détectées ne devant pas faire partie de la communication vidéo, un recadrage de l'image traitée (S_t) pour l'obtention d'une image traitée recadrée (S'_t), le recadrage étant configuré pour supprimer au moins des bandes latérales gauche et droite de l'image traitée, les bandes latérales étant d'une largeur susceptible de contenir une ou plusieurs personnes avant que leur détection ne devienne possible, et la transmission (205) de l'image traitée recadrée.

2. Méthode selon la revendication 1, comprenant, pour une première zone donnée ne pouvant pas être associée à une seconde zone sur la base du critère d'association, la détermination d'une troisième zone (C'_i), où la troisième zone est une zone de l'image fonction de la première zone donnée et destinée à servir de seconde zone associée à la première zone donnée pour former une représentation d'une personne dans l'image pour le traitement de l'image.

3. Méthode selon l'une des revendications 1 ou 2, comprenant, lorsqu'une seconde zone ne peut être associée à une première zone, le marquage de cette seconde zone comme faisant partie d'une personne qui ne doit pas participer à la communication vidéo, la représentation de cette personne comprenant alors uniquement la seconde zone.

4. Méthode selon l'une des revendications 1 à 3, comprenant l'extraction (503), à partir de chaque première zone, de paramètres caractéristiques (E_i) du visage de chaque première zone, lesdites données caractéristiques étant adaptées pour permettre de déterminer, à partir d'une base de données, si une personne correspondant à un visage doit ou ne doit pas faire partie de la communication vidéo.

5. Méthode selon la revendication 4, ladite base de données comportant :
- soit des paramètres caractéristiques de visages pour une ou plusieurs personnes autorisées à participer à la communication vidéo ;
ou au moins l'un parmi :
- des paramètres caractéristiques pour un ou plusieurs visages ainsi que pour chaque visage une indication que la personne correspondant au visage doit faire partie de la communication vidéo ; et
- des paramètres caractéristiques pour un ou plusieurs visages ainsi que pour chaque visage une indication que la personne correspondant au visage ne doit pas faire partie de la communication vidéo.

6. Méthode selon la revendication 5, comprenant une initialisation (401) de la base de données avec des données stockées à l'avance.

7. Méthode selon la revendication 5 ou 6, comprenant l'augmentation de la base de données par :
- l'identification, d'une ou plusieurs premières zones comprenant un visage, lors d'un intervalle de temps du début de la communication vidéo ;
- l'extraction, à partir de chaque première zone, de paramètres caractéristiques (E_i) du visage de chaque première zone ;
- le stockage des paramètres caractéristiques du visage de chaque première zone avec une indication respective que la personne correspondant au visage doit faire partie de la communication vidéo.

8. Dispositif (100) comprenant un processeur (107) et une mémoire (105) comportant du code logiciel, le processeur exécutant le code logiciel conduisant le dispositif à mettre en œuvre la méthode selon l'une des revendications 1 à 7.

9. Décodeur de télévision comportant un dispositif selon la revendication 8.

10. Produit programme d'ordinateur comportant des instructions qui lorsqu'elles sont exécutées par au moins un processeur causent l'exécution de la méthode selon l'une des revendications 1 à 7 par ledit au moins un processeur.

11. Support de stockage non transitoire comportant des instructions qui lorsqu'elles sont exécutées par au moins un processeur causent l'exécution de la méthode selon l'une des revendications 1 à 7 par ledit au moins un processeur.

## Patentansprüche

1. Verfahren für eine Videokommunikation, implementiert durch eine Vorrichtung (100), umfassend einen Prozessor (107) und einen Speicher (105), mit Softwarecode, wobei der Prozessor den Softwarecode ausführt, wobei die Vorrichtung veranlasst wird, das Verfahren zu implementieren, das Verfahren umfassend:
- Erhalten (201) eines durch eine Kamera erzeugten Bildes (I_t);
- Erfassen (202) von einer oder mehreren Personen (PA, PN) in dem Bild, das Erfassen umfassend das Identifizieren (501) eines oder mehrerer erster Bereiche des Bildes (V_i), jeder erste Bereich umfassend ein Gesicht;
**gekennzeichnet durch**
- das Identifizieren (501) eines oder mehrerer zweiter Bereiche des Bildes (C_i), jeder zweite Bereich umfassend einen Körper, und das Zuordnen (502), in Abhängigkeit von einem Zuordnungskriterium, eines ersten Bereichs und eines zweiten Bereichs, zum Ausbilden einer Abbildung einer Person (P_i) in dem Bild;
- im Falle des Erfassens einer oder mehrerer Personen, das Überprüfen (203), für jede Person, eines Kriteriums, das angibt, ob die Person Teil der Videokommunikation sein soll oder nicht;
- das Verarbeiten (204) des Bildes, zum Löschen der erfassten Person oder Personen, die nicht Teil der Videokommunikation sein sollen, aus dem Bild, das Verarbeiten des Bildes umfassend das Erhalten einer Maske (M_t) anhand der Abbildungen von Personen, die nicht Teil der Videokommunikation sein sollen, und das Erhalten eines verarbeiteten Bildes in Abhängigkeit von der Maske, dem von der Kamera erhaltenen Bild (I_t) und einem zuvor erhaltenen verarbeiteten Bild (S_t-1), und das den Hintergrund des Bildes enthält, der erscheinen würde, wenn die Person oder Personen abwesend wären, auf der Basis eines anfänglichen Bildes einer durch die Kamera gefilmten Szene ohne Personen, das Löschen umfassend das Ersetzen der Maske durch den Hintergrund des Bildes, der erscheinen würde, wenn die Person oder Personen abwesend wären;
- das Verfahren umfassend, nach der Verarbeitung des Bildes zum Löschen der erfassten Person oder Personen, die nicht Teil der Videokommunikation sein sollen, aus dem Bild, ein Zuschneiden des verarbeiteten Bildes (S_t) zum Erhalten eines zugeschnittenen, verarbeiteten Bildes (S'_t), wobei das Zuschneiden zum Entfernen mindestens des linken und des rechten Seitenstreifens des verarbeiteten Bildes konfiguriert ist, wobei die Seitenstreifen eine Breite aufweisen, die geeignet ist, eine oder mehrere Personen aufzunehmen, bevor deren Erfassung möglich wird, und
das Übertragen (205) des zugeschnittenen, verarbeiteten Bildes.

2. Verfahren nach Anspruch 1, umfassend, für einen gegebenen ersten Bereich, der auf der Basis des Zuordnungskriteriums keinem zweiten Bereich zugeordnet werden kann, das Bestimmen eines dritten Bereichs (C'_i), wobei der dritte Bereich ein Bereich des Bildes in Abhängigkeit von dem gegebenen ersten Bereich ist und vorgesehen ist, als dem gegebenen ersten Bereich zugeordneter zweiter Bereich zu dienen, zum Ausbilden einer Abbildung einer Person in dem Bild für die Bildverarbeitung.

3. Verfahren nach einem der Ansprüche 1 oder 2, umfassend, wenn ein zweiter Bereich nicht einem ersten Bereich zugeordnet werden kann, das Markieren dieses zweiten Bereichs als Teil einer Person, die nicht an der Videokommunikation teilnehmen soll, wobei die Abbildung dieser Person dann ausschließlich den zweiten Bereich umfasst.

4. Verfahren nach einem der Ansprüche 1 bis 3, umfassend das Extrahieren (503), aus jedem ersten Bereich, von charakteristischen Parametern (E_i) des Gesichts jedes ersten Bereichs, wobei die charakteristischen Daten dazu geeignet sind, anhand einer Datenbank das Bestimmen zu ermöglichen, ob eine einem Gesicht entsprechende Person Teil der Videokommunikation sein soll oder nicht.

5. Verfahren nach Anspruch 4, wobei die Datenbank aufweist:
- entweder charakteristische Parameter von Gesichtern für eine oder mehrere Personen, die zum Teilnehmen an der Videokommunikation berechtigt sind;
oder mindestens eines von:
- charakteristischen Parametern für ein oder mehrere Gesichter sowie für jedes Gesicht einer Angabe, dass die dem Gesicht entsprechende Person Teil der Videokommunikation sein soll; und
- charakteristischen Parametern für ein oder mehrere Gesichter sowie für jedes Gesicht einer Angabe, dass die dem Gesicht entsprechende Person nicht Teil der Videokommunikation sein soll.

6. Verfahren nach Anspruch 5, umfassend ein Initialisieren (401) der Datenbank mit vorab gespeicherten Daten.

7. Verfahren nach Anspruch 5 oder 6, umfassend die Erweiterung der Datenbank durch:
- Identifizieren eines oder mehrerer erster Bereiche, umfassend ein Gesicht, während eines Zeitintervalls zu Beginn der Videokommunikation;
- das Extrahieren, aus jedem ersten Bereich, von charakteristischen Parametern (E_i) des Gesichts in jedem ersten Bereich;
- das Speichern der charakteristischen Gesichtsparameter jedes ersten Bereichs mit einer jeweiligen Angabe, dass die dem Gesicht entsprechende Person Teil der Videokommunikation sein soll.

8. Vorrichtung (100) umfassend einen Prozessor (107) und einen Speicher (105) mit Softwarecode, wobei der Prozessor, der den Softwarecode ausführt, die Vorrichtung veranlasst, das Verfahren nach einem der Ansprüche 1 bis 7 zu implementieren.

9. Fernsehdecoder mit einer Vorrichtung nach Anspruch 8.

10. Computerprogrammprodukt mit Anweisungen, die bei ihrer Ausführung durch mindestens einen Prozessor das Ausführen des Verfahrens nach einem der Ansprüche 1 bis 7 durch den mindestens einen Prozessor bewirken.

11. Nichttransitorisches Speichermedium mit Anweisungen, die bei ihrer Ausführung durch mindestens einen Prozessor das Ausführen des Verfahrens nach einem der Ansprüche 1 bis 7 durch den mindestens einen Prozessor bewirken.

## Claims

1. A video communication method implemented by a device (100) comprising a processor (107) and a memory (105) comprising software code, the processor executing the software code causing the device to implement the method, the method comprising:
- obtaining (201) an image (I_t) generated by a camera;
- detecting (202) one or more persons (PA, PN) in the image, the detection comprising the identification (501) of one or more first areas of the image (V_i), each first area comprising a face;
**characterized by**
- identifying (501) one or more second areas of the image (C_i), each second area comprising a body; and associating (502), on the basis of an association criterion, a first area and a second area to form a representation of a person (P_i) in the image;
- in the event that one or more persons are detected, checking (203) for each person a criterion indicating whether the person should or should not be part of the video communication;
- processing (204) the image to remove from the image the detected person or persons who should not be part of the video communication, the image processing comprising obtaining a mask (M_t) from representations of persons who should not be part of the video communication, and obtaining a processed image based on the mask, on the image (I_t) obtained from the camera, and on a previously obtained processed image (S_t-1) and containing the background of the image that would appear if the person or persons were absent, based on an initial image of a scene filmed by the camera without any persons, the removal comprising replacing the mask with the background of the image that would appear if the person or persons were absent;
- the method comprising, following the processing of the image to remove from the image the detected person or persons who should not be part of the video communication, cropping the processed image (S_t) to obtain a cropped processed image (S'_t), the cropping being configured to remove at least left and right lateral bands from the processed image, the lateral bands being of a width likely to contain one or more persons before it becomes possible to detect them, and
transmitting (205) the cropped processed image.

2. The method according to claim 1, comprising, for a given first area not associable with a second area on the basis of the association criterion, determining a third area (C'_i), where the third area is an area of the image dependent on the given first area and intended to serve as a second area associated with the given first area to form a representation of a person in the image for image processing.

3. The method according to any of claims 1 or 2, comprising, when a second area cannot be associated with a first area, marking this second area as part of a person who should not participate in the video communication, the representation of this person then comprising only the second area.

4. The method according to any of claims 1 to 3, comprising extracting (503), from each first area, characteristic parameters (E_i) of the face of each first area, said characteristic data being suitable for allowing determination, from a database, of whether a person corresponding to a face should or should not be part of the video communication.

5. The method according to claim 4, said database comprising:
- either characteristic face parameters for one or more persons authorized to participate in the video communication;
or at least one of:
- characteristic parameters for one or more faces and, for each face, an indication that the person corresponding to the face should be part of the video communication; and
- characteristic parameters for one or more faces and, for each face, an indication that the person corresponding to the face should not be part of the video communication.

6. The method according to claim 5, comprising initializing (401) the database with data stored in advance.

7. The method according to claim 5 or 6, comprising augmenting the database by:
- identifying one or more first areas comprising a face, during a time interval from the start of the video communication;
- extracting, from each first area, characteristic parameters (E_i) of the face of each first area;
- storing the characteristic face parameters of each first area with a respective indication that the person corresponding to the face should be part of the video communication.

8. A device (100) comprising a processor (107) and a memory (105) comprising software code, the processor executing the software code causing the device to implement the method according to any of claims 1 to 7.

9. A television decoder comprising a device according to claim 8.

10. A computer program product comprising instructions which, when executed by at least one processor, cause the method according to any of claims 1 to 7 to be executed by said at least one processor.

11. A non-transitory storage medium comprising instructions which, when executed by at least one processor, cause the method according to any of claims 1 to 7 to be executed by said at least one processor.
